# EUROPEAN PATENT SPECIFICATION

(11) **EP 3 750 397 B1**
(45) Date of publication and mention of the grant of the patent: **09.08.2023**
(21) Application number: 20179743.8
(22) Date of filing: 12.06.2020
(51) Int. Cl.: A01F 15/08, B60G 17/015, B60G 17/02, B60G 23/00

(54) **AGRICULTURAL TRACTOR WITH INTEGRATED SUSPENSION SYSTEM FOR BALER APPLICATION**
LANDWIRTSCHAFTLICHE ZUGMASCHINE MIT INTEGRIERTEM AUFHÄNGUNGSSYSTEM FÜR BALLENPRESSENANWENDUNG
TRACTEUR AGRICOLE DOTÉ D'UN SYSTÈME DE SUSPENSION INTÉGRÉ POUR APPLICATION DE RAMASSEUSE-PRESSE

(30) Priority: 13.06.2019 IT 201900008913
(43) Date of publication of application: 16.12.2020
(73) Proprietor: CNH Industrial Italia S.p.A., 10156 Torino (IT)
(72) Inventor: Stefano, Fiorati, 44028 Poggio Renatico (Ferrara) (IT); Hale, Nicholas, 56017 San Giuliano Terme (PI) (IT); Lenzini, Nicola, 41027 Pievepelago (IT); Hollins, Richard, Pebmarsh, Essex, C092NH (GB)
(74) Representative: CNH Industrial IP Department

(56) References cited:
- EP-A1- 0 518 226
- EP-A1- 2 502 766
- US-A1- 2018 084 723
- US-A1- 2018 125 010

## Description

### TECHNICAL FIELD

The present invention concerns an agricultural tractor with integrated suspension system for baler application.

### BACKGROUND OF THE INVENTION

A baler, most often called a hay baler, is a piece of farm machinery used to compress by means of a movable plunger a cut and raked crop (such as hay, cotton, flax straw, salt marsh hay, or silage) into compact bales that are easy to handle, transport, and store. Often, bales are configured to dry and preserve some intrinsic (e.g. the nutritional) value of the plants bundled. Several different types of balers are commonly used, each producing a different type of bale - rectangular or cylindrical, of various sizes, bound with twine, strapping, netting, or wire.

The baler is normally towed by an agricultural vehicle (normally a tractor) and is powered by the PTO of the tractor.

The engine speed of the tractor is not constant and drops periodically due to the incremented torque requested by the plunger through the PTO while pressing the cut and raked crop. The drops in the engine speed and the bale drops produce forces that are transmitted to the tractor and that, in some operating conditions, causes comfort problems to the operator driving the tractor as the transmitted force induces a pitch movement and/or an acceleration to the operator's cab. US20180084723 discloses a control unit able to detect torque required by the baler and to regulate accordingly the propulsion drivetrain.

Scope of the present invention is to provide an agricultural tractor that is provided with an integrated suspension system that may prevent the above discomfort condition due to the operating cycle of the towed baler.

### SUMMARY OF THE INVENTION

The aforementioned aim is reached by the present invention as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 shows schematically an agricultural tractor towing a baler; and
- Figure 2 is a flow chart that explains the control logic of the suspension system of the tractor.

### DETAILED DESCRIPTION OF THE INVENTION

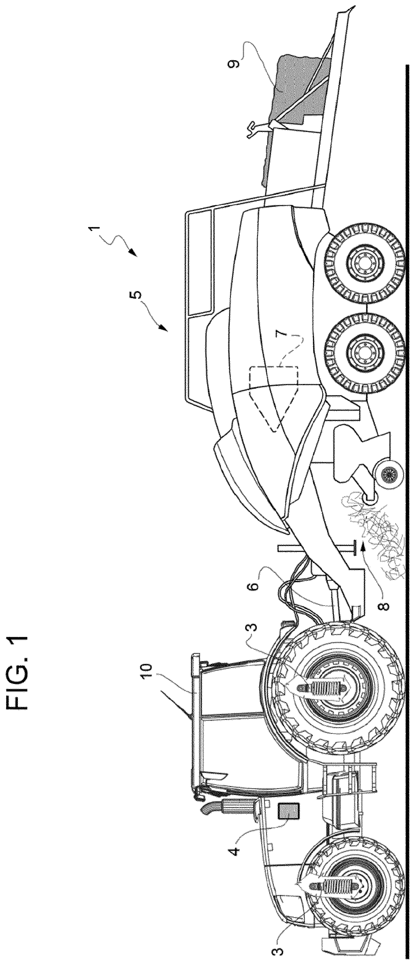

In figure 1, numeral 1 indicates, as a whole, an agricultural tractor (of known kind) with an integrated suspension system 3 (of known kind, indicated schematically by means of dampers) designed to regulate the stiffness of the suspensions based on a control signal of an electronic control unit 4 (shown schematically). As it is known, a variable stiffness architecture is used in the suspension system to counteract the body roll moment, thereby enhancing the roll stability of the tractor 1.

The tractor 1 tows an implement 5 that is a baler powered by the torque provided by a PTO 6 of the tractor 1.
The baler 5 (of known kind) is provided with an internal plunger 7 (shown schematically) that is used to compress a cut and raked crop 8 (such as hay, cotton, flax straw, salt marsh hay, or silage) into compact bales 9 that are easy to handle, transport, and store. In the example, rectangular bales 9 are provided.

According to the present invention, the electronic control 4 is designed to detect the operating cycle of the plunger 7 of the baler 5 and implement a comfort control mode by regulating the stiffness of the suspension system 3 in order to reduce a pitch movement of the tractor 1 and/or an acceleration to the operator's cab 10 induced by the forces and/or torques and/or accelerations transmitted from the baler 5 to the tractor 1.

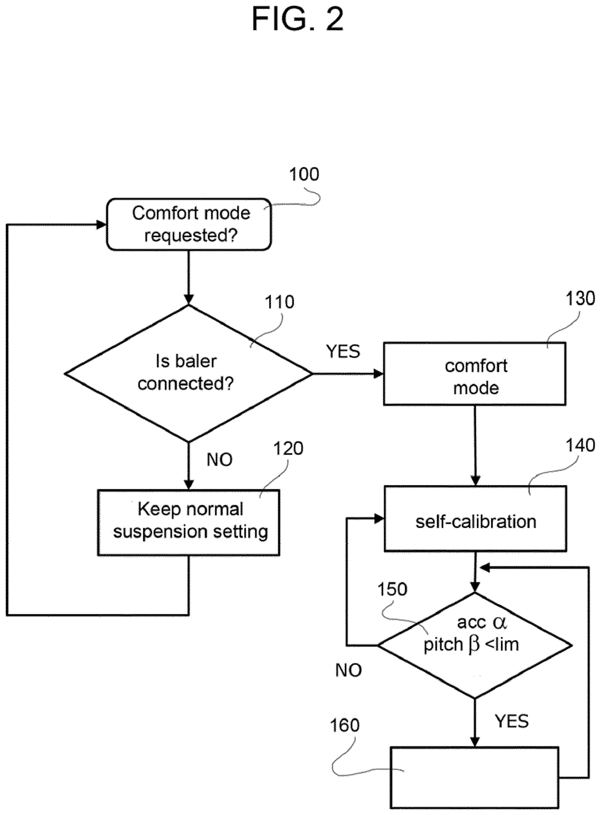

One preferred operating mode of the electronic unit 4 is shown in the flow chart of figure 2.

According to block 100 the electronic control unit checks if a comfort mode has been requested by the operator; in the affirmative condition, block 100 is followed by block 110 that checks if the baler 5 has been connected with the tractor 1. If no connection is detected, block 110 is followed by a block 120 that keeps a normal setting for the integrated suspension system 3. If a connection is detected (connection is detected by checking the status or messages coming from the ISOBUS for instance), block 110 is followed by a block 130 that enables the requested comfort mode. Accordingly, the electronic control unit 4 is designed to provide a prediction of the forces/torques/accelerations transmitted by the baler 5 towards the tractor 1. Under the above comfort control mode, the stiffness of the suspension system 3 is regulated based on the prediction in order to anticipate and thus reducing a pitch movement of the tractor and/or an acceleration to the operator's cab 10 induced by the forces/torques/accelerations.

More specifically, in the embodiment described in figure 2, block 140 provides a self calibration procedure wherein the forces and/or accelerations and/or torques transmitted from the baler 5 to the tractor 1 are measured (for example they are measured by using sensors for determining the excursion of the suspension system or sensors for measuring the torque in the PTO or sensors for measuring the force transmitted to the rear hitches) in a calibration interval to determine the frequency and parameters of the operating cycle of the plunger 7. Parameters of the operating cycle of the baler comprise: information describing plunger movement, or the engine speed drop or the bale drops.
During the baler operation, the above parameters have an almost constant and periodical behavior and it is possible to interpolate and thus predict the waveforms of the forces/torques/accelerations transmitted to the tractor 1 from the baler 5.

For instance, the calibration step may determine that the force/torques/accelerations transmitted to the tractor 1 by the baler 5 have a periodic pulsating shape with peaks spaced by period τ (and frequency 1/τ) and average peak value Pₘ. The parameters are stored in a memory and used to implement the comfort mode.

According to block 150, the electronic control unit 4 operating under the comfort mode is designed to maintain the acceleration **α** of the tractor and/or the pitch **β** introduced to the tractor's cab 10 under the set limit values **αₗᵢₘ** and **βₗᵢₘ** having value as lower as possible, for instance values defined by the user as default or predetermined values. The above operation is obtained by a closed control loop system (we refer to block 160) that measures the acceleration **α** and/or the pitch **β** and regulate the stiffness of the suspension to maintain these two values under the set limit values **αₗᵢₘ** and **βₗᵢₘ.** Preferably, the measurement of the acceleration α and/or the pitch β of the tractor induced by the baler can be obtained by means of sensors measuring the excursions of the suspension system for example. Moreover, the block 150 is configured to provide feedback to the self-calibration module to improve or fine tuning the calculation of the period τ and the average peak value Pm. In this way, it is possible to predict what are the force/torques/accelerations induced in the tractor 1 by the baler 5 and then anticipate the reaction by regulating the stiffness of the suspension.

Alternatively to the use of above prediction of figure 2, the electronic control unit 4 may be designed to receive a measure of the forces/torques/accelerations transmitted by the baler 5 (towed by the tractor 1) to the tractor 1; under said comfort control mode the stiffness of the suspension system is regulated in real time and in closed control loop based on said measure in order to reduce a pitch movement of the tractor 1 and/or an acceleration to the operator's cab 10 induced by the forces/torques/accelerations.

Finally, the electronic control unit 4 operating under the control mode may designed to regulate the stiffness of the suspension system by considering additional information, for instance type of crop, environmental conditions, dimension or weight of the bale, weight of the towed baler or other parameter set by the user. The stiffness of the suspension system may be regulated by controlling hydraulically the fluid in the hydraulic suspensions, or any other known method used for regulating the stiffness or the dampening excursion of a generic suspension system, as not limiting example the one disclosed in EP1905290.

## Claims

1. Agricultural tractor (1) with integrated suspension system (3), wherein the tractor (1) is provided with an integrated suspension system (3) designed to regulate the stiffness of the suspensions based on a control signal, **characterized by** comprising electronic control means (4) configured to detect the operating cycle of a towed baler (3) and to implement a comfort control mode (130) by regulating the stiffness of the suspension system in order to reduce a pitch movement of the tractor and/or an acceleration to the operator's cab (10) induced by the forces and/or accelerations and/or torques transmitted from the baler (5) to the tractor (1) .

2. Agricultural tractor (1) as defined in claim 1, wherein said electronic control means (4) is configured to provide a prediction of the forces and/or accelerations and/or torques transmitted by the baler (5) to the tractor (1); under said comfort control mode (130) the stiffness of the suspension system (3) is regulated based on said prediction in order to reduce the pitch movement of the tractor and/or the acceleration to the operator's cab (10) induced by said forces and/or accelerations and/or torques.

3. Agricultural tractor as defined in claim 2, wherein said electronic control means (4) is configured to implement a self calibration procedure (140) wherein the forces and/or accelerations and/or torques transmitted from the baler to the tractor are measured in a calibration interval to determine the frequency and at least one parameter of the operating cycle of the baler.

4. Agricultural tractor as defined in claim 3, wherein said at least one parameter is information describing one of plunger movement, or engine speed drop or bale drops.

5. Agricultural tractor (1) as defined in claim 1, wherein said electronic control means (4) is configured to receive a measure of the forces and/or accelerations and/or torques transmitted by the baler (5) to the tractor; under said comfort control mode the stiffness of the suspension system (3) is regulated in a closed control loop based on the measure in order to reduce a pitch movement of the tractor and/or an acceleration to the operator's cab induced by said forces and/or accelerations and/or torques.

6. Agricultural tractor as defined in claim 1, wherein said electronic control means (4) is configured to detect the physical connection between the tractor (1) and the baler (5) and, once the connection is established (110), to enable said comfort control mode (130) of operation of the suspension system (3).

7. Agricultural tractor as defined in any of the preceding claim, wherein said electronic control means operating under said control mode is configured to maintain (150) the acceleration of the tractor and/or the pitch introduced to the tractor's cab under predetermined values.

8. Agricultural tractor as defined in any of the preceding claim, wherein said electronic control means (4) operating under said control mode is configured to regulate the stiffness of said suspension system (3) by considering additional information, for instance type of crop, environmental conditions, dimension or weight of the bale or other parameter set by the user.

## Patentansprüche

1. Landwirtschaftliche Zugmaschine (1) mit integriertem Aufhängungssystem (3),
wobei die Zugmaschine (1) mit einem integrierten Aufhängungssystem (3) versehen ist, das dazu eingerichtet ist, die Steifigkeit der Aufhängungen auf Basis eines Steuersignals zu steuern,
**dadurch gekennzeichnet, dass**
eine elektronische Steuereinrichtung (4) vorgesehen ist, die dazu eingerichtet ist, den Arbeitszyklus einer gezogenen Ballenpresse (5) zu erfassen und einen Komfort-Steuermodus (130) durch das Steuern der Steifigkeit des Aufhängungssystems auszuführen, um eine Nickbewegung der Zugmaschine und/oder eine Beschleunigung der Bedienerkabine (10) zu verringern, die durch die Kräfte und/oder Beschleunigungen und/oder Drehmomente bewirkt werden, die von der Ballenpresse (5) auf die Zugmaschine (1) übertragen werden.

2. Landwirtschaftliche Zugmaschine (1) nach Anspruch 1, wobei die elektronische Steuereinrichtung (4) dazu eingerichtet ist, eine Vorhersage über die Kräfte und/oder Beschleunigungen und/oder Drehmomente zu treffen, die von der Ballenpresse (5) auf die Zugmaschine (1) übertragen werden; wobei in dem Komfort-Steuermodus (130) die Steifigkeit des Aufhängungssystems (3) auf Basis der Vorhersage gesteuert wird, um die Nickbewegung der Zugmaschine und/oder die Beschleunigung der Bedienerkabine (10) zu verringern, die durch die Kräfte und/oder Beschleunigungen und/oder Drehmomente bewirkt werden.

3. Landwirtschaftliche Zugmaschine nach Anspruch 2, wobei die elektronische Steuereinrichtung (4) dazu eingerichtet ist, eine Selbstkalibrierungsprozedur (140) auszuführen, wobei die Kräfte und/oder Beschleunigungen und/oder Drehmomente, die von der Ballenpresse auf die Zugmaschine übertragen werden, in einem Kalibrierungsintervall erfasst werden, um die Frequenz und mindestens einen Parameter des Arbeitszyklus der Ballenpresse zu ermitteln.

4. Landwirtschaftliche Zugmaschine nach Anspruch 3, wobei der mindestens eine Parameter eine Information ist, die eine Kolbenbewegung, einen Abfall der Motordrehzahl oder einen Ballenabwurf beschreibt.

5. Landwirtschaftliche Zugmaschine (1) nach Anspruch 1, wobei die elektronische Steuereinrichtung (4) dazu eingerichtet ist, eine Messgröße der Kräfte und/oder Beschleunigungen und/oder Drehmomente zu erhalten, die von der Ballenpresse (5) auf die Zugmaschine übertragen werden; wobei in dem Komfort-Steuermodus die Steifigkeit des Aufhängungssystems (3) in einem geschlossenen Regelkreis auf Basis der Messgröße gesteuert wird, um eine Nickbewegung der Zugmaschine und/oder eine Beschleunigung der Bedienerkabine zu verringern, die durch die Kräfte und/oder Beschleunigungen und/oder Drehmomente bewirkt werden.

6. Landwirtschaftliche Zugmaschine nach Anspruch 1, wobei die elektronische Steuereinrichtung (4) dazu eingerichtet ist, die physikalische Verbindung zwischen der Zugmaschine (1) und der Ballenpresse (5) festzustellen, und wenn die Verbindung hergestellt ist (110), dem Komfort-Steuermodus (130) die Betätigung des Aufhängungssystems (3) zu ermöglichen.

7. Landwirtschaftliche Zugmaschine nach einem der vorhergehenden Ansprüche, wobei die elektronische Steuereinrichtung, die in dem Steuermodus arbeitet, dazu eingerichtet ist, die Beschleunigung der Zugmaschine und/oder die Nickbewegung, die auf die Bedienerkabine aufgebracht werden, unter vorbestimmten Werten zu halten (150).

8. Landwirtschaftliche Zugmaschine nach einem der vorhergehenden Ansprüche, wobei die elektronische Steuereinrichtung (4), die in dem Steuermodus arbeitet, dazu eingerichtet ist, die Steifigkeit des Aufhängungssystems (3) durch die Berücksichtigung zusätzlicher Information, wie z. B. der Art des Ernteguts, der Umgebungsbedingungen, der Größe oder des Gewichts des Ballens oder anderer Parameter, die von dem Bediener festgelegt werden, zu steuern.

## Revendications

1. Tracteur agricole (1) avec système de suspension intégré (3),
dans lequel le tracteur (1) est équipé d'un système de suspension intégré (3) conçu pour réguler la rigidité des suspensions sur la base d'un signal de commande, **caractérisé par le fait qu'**il comprend des moyens de commande électronique (4) configurés pour détecter le cycle de fonctionnement d'une presse à balles remorquée (3) et pour mettre en oeuvre un mode de commande de confort (130) en régulant la rigidité du système de suspension afin de réduire un mouvement de tangage du tracteur et/ou une accélération de la cabine de l'opérateur (10) induite par les forces et/ou les accélérations et/ou les couples transmis de la presse à balles (5) au tracteur (1).

2. Tracteur agricole (1) selon la revendication 1, dans lequel lesdits moyens de commande électronique (4) sont configurés pour fournir une prédiction des forces et/ou des accélérations et/ou des couples transmis par la presse à balles (5) au tracteur (1) ; dans ledit mode de commande de confort (130), la rigidité du système de suspension (3) est régulée sur la base de ladite prédiction afin de réduire le mouvement de tangage du tracteur et/ou l'accélération de la cabine de l'opérateur (10) induite par lesdits forces et/ou les accélérations et/ou les couples.

3. Tracteur agricole selon la revendication 2, dans lequel lesdits moyens de commande électronique (4) sont configurés pour mettre en oeuvre une procédure d'auto-étalonnage (140) dans laquelle les forces et/ou les accélérations et/ou les couples transmis de la presse à balles au tracteur sont mesurés dans un intervalle d'étalonnage pour déterminer la fréquence et au moins un paramètre du cycle de fonctionnement de la presse à balles.

4. Tracteur agricole selon la revendication 3, dans lequel ledit au moins un paramètre est une information décrivant l'un parmi le mouvement du piston, la chute de vitesse du moteur ou les chutes de balles.

5. Tracteur agricole (1) selon la revendication 1, dans lequel lesdits moyens de commande électronique (4) sont configurés pour recevoir une mesure des forces et/ou des accélérations et/ou des couples transmis par la presse à balles (5) au tracteur ; dans ledit mode de commande de confort, la rigidité du système de suspension (3) est régulée dans une boucle de commande fermée sur la base de ladite mesure afin de réduire un mouvement de tangage du tracteur et/ou une accélération de la cabine de l'opérateur induite par lesdits forces et/ou les accélérations et/ou les couples.

6. Tracteur agricole selon la revendication 1, dans lequel lesdits moyens de commande électronique (4) sont configurés pour détecter la connexion physique entre le tracteur (1) et la presse à balles (5) et, une fois la connexion établie (110), pour activer ledit mode de commande de confort (130) de fonctionnement du système de suspension (3).

7. Tracteur agricole selon l'une quelconque des revendications précédentes, dans lequel lesdits moyens de commande électronique fonctionnant sous ledit mode de commande sont configurés pour maintenir (150) l'accélération du tracteur et/ou le tangage introduit dans la cabine du tracteur sous des valeurs prédéterminées.

8. Tracteur agricole selon l'une quelconque des revendications précédentes, dans lequel lesdits moyens de commande électronique (4) fonctionnant dans ledit mode de commande sont configurés pour réguler la rigidité dudit système de suspension (3) en tenant compte d'informations supplémentaires, par exemple le type de culture, les conditions environnementales, la dimension ou le poids de la balle ou d'autres paramètres définis par l'utilisateur.
